# EUROPEAN PATENT APPLICATION

(11) **EP 4 817 950 A1**
(43) Date of publication of application: **07.10.2026**
(21) Application number: 26160081.1
(22) Date of filing: 23.02.2026
(51) Int. Cl.: B60N 2/70, B29C 48/00, B68G 11/03

(54) **CUSHION ASSEMBLY AND METHOD OF ASSEMBLY**

(30) Priority: 01.04.2025 US 202519096859
(71) Applicant: Lear Corporation, Southfield, MI 48033 (US)
(72) Inventor: Pucher, Amanda, Farmington Hills, MI, 48334 (US); Fodale, Alyssa, Rochester, MI, 48306 (US); Hallock, Joshua, Warren, MI, 48088 (US); Hale, David, Northville, MI, 48168 (US); Brudzynsky, Michelle A., Farmington Hills, MI, 48331 (US)
(74) Representative: Grünecker Patent- und Rechtsanwälte PartG mbB

(57) **Abstract**

A cushion assembly is provided with a mesh member comprising a set of filaments of polymeric material. At least two members of the set of filaments are looped and bonded to each other. Each of the set of filaments is provided with terminal ends. The mesh member is further provided with an external surface with a trench formed with a length at least partially along the external surface of the mesh member. A concentration of the set of filaments is greater around a periphery of the trench than within an interior of the mesh member.

## Description

### TECHNICAL FIELD

Various embodiments relate to a cushion assembly and a method of assembly.

### BRIEF DESCRIPTION OF THE DRAWINGS

Figure 1 is a perspective view of an example of a seat assembly including a filament mesh structure;
Figure 2 is schematic view of an example of a manufacturing system for making the filament mesh structure;
Figure 3 is a perspective view of a filament mesh structure formed from the manufacturing system in Figure 2;
Figure 4 is a side view of the filament mesh structure in Figure 3;
Figure 5 is a schematic view of an example of a manufacturing system for making the filament mesh structure according to another embodiment;
Figure 6 is an elevation view of a nozzle assembly of the manufacturing system of Figure 5, according to an embodiment;
Figure 7 is a plan view of the nozzle assembly of Figure 6 shaping the filament mesh structure of Figure 3;
Figure 8 is a plan view of the filament mesh structure manufactured by the manufacturing system of Figure 5;
Figure 9 is a schematic elevation view of a nozzle assembly of the manufacturing system of Figure 5, according to another embodiment;
Figure 10 is an elevation view of a nozzle assembly of the manufacturing system of Figure 5, according to another embodiment; and
Figure 11 is an enlarged perspective view of a nozzle of the nozzle assembly of Figure 10.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

It is to be understood that the disclosed embodiments are merely exemplary and that various and alternative forms are possible. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ embodiments according to the disclosure.

"One or more" includes a function being performed by one element, a function being performed by more than one element, *e.g.,* in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first nozzle could be termed a second nozzle, and, similarly, a second nozzle could be termed a first nozzle, without departing from the scope of the various described embodiments. The first nozzle and the second nozzle are both nozzles, but they are not the same nozzle.

The terminology used in the description of the various described embodiments herein is for the purpose of describing particular embodiments only and is not intended to be limiting. As used in the description of the various described embodiments and the appended claims, the singular forms "a" and "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising" when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

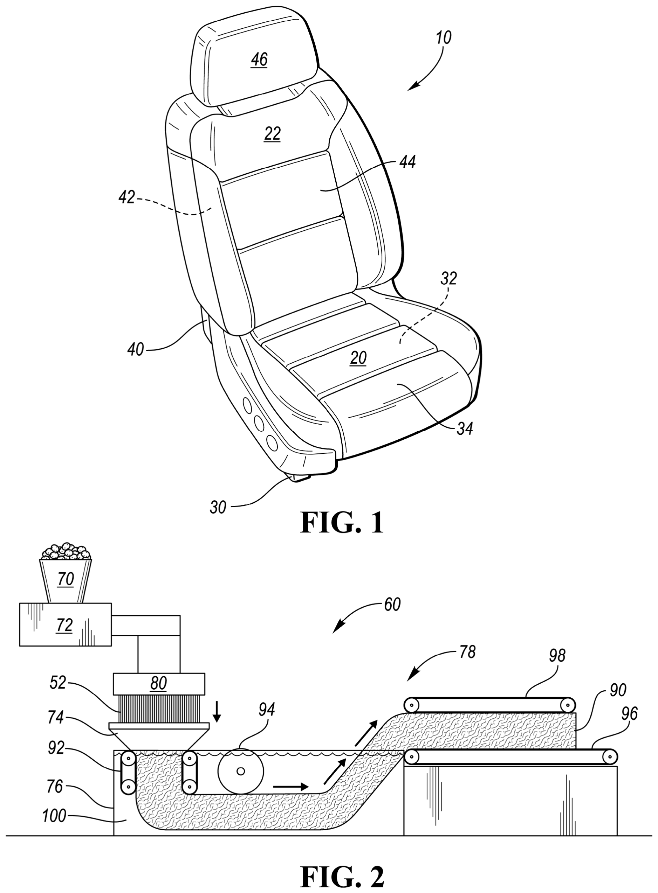

Referring to Figure 1, an example of a seat assembly 10 is shown. In some embodiments, the seat assembly 10 is a vehicle seat assembly, such as for a land vehicle like a car, truck, bus, or the like, or for a non-land vehicle like an aircraft or a watercraft. For example, the seat assembly 10 for a land vehicle may be shaped and sized as a front row driver or passenger seat, a second, third, or other rear row seat, and may include bucket-style seats, bench-style seats, or other seat styles. Furthermore, the seat assembly 10 may be a non-stowable seat or a stowable seat that may be foldable and stowable in a cavity in the vehicle floor. Additionally, the seat assembly 10 may be configured for non-vehicle applications such as furniture.

In the configuration shown in Figure 1, the seat assembly 10 includes a seat bottom 20 and a seat back 22. It is contemplated that the seat back 22 may be omitted in some configurations, such as when the seat assembly 10 is configured as a motorcycle seat or stool. The seat bottom 20 is configured to receive a seated occupant and support the pelvis and thighs of the seat occupant. The seat bottom 20 includes a seat bottom frame 30, a cushion 32, and a trim cover 34.

The seat bottom frame 30 is a structure that supports the cushion 32. The seat bottom frame 30 includes one or more structural members and may be made of any suitable material, such as a metal alloy, polymeric material, fiber reinforced polymeric material, or combinations thereof. In some configurations, the seat bottom frame 30 includes a panel, seat pan, suspension mat, or suspension wires upon which the cushion 32 is disposed.

The cushion 32 is disposed on the seat bottom frame 30. The cushion 32 is made of a compliant material that supports the seat occupant and distributes load forces from the seat occupant to the seat bottom frame 30. The cushion 32 and associated methods of manufacture will be discussed in more detail below.

The trim cover 34 covers at least a portion of the cushion 32. In addition, the trim cover 34 provides one or more visible exterior surfaces of the seat back 22. The seat occupant may be disposed on the trim cover 34 when seated upon the seat assembly 10. The trim cover 34 is made of any suitable material or materials, such as fabric, leather, leatherette, vinyl, or combinations thereof. The trim cover 34 may include a plurality of trim panels that are assembled in any suitable manner, such as by fusing or stitching. The trim cover 34 is attached to the seat bottom frame 30, the cushion 32, or both. For example, the trim cover 34 may include trim attachment features that are attached to the seat bottom frame 30, the cushion 32, or both, to inhibit removal of the trim cover 34 and help conform the trim cover 34 to the contour of the seat bottom frame 30, the cushion 32, or both. The trim cover 34 may also be attached to an attachment pad as will be discussed in more detail below.

The seat back 22 is configured to support the back of a seated occupant. The seat back 22 is disposed adjacent to the seat bottom 20. For example, the seat back 22 may be disposed above the seat bottom 20 and near the rear side of the seat bottom 20. The seat back 22 extends in a generally upward direction away from the seat bottom 20. In some configurations, the seat back 22 is mounted to the seat bottom 20 and may be pivotable with respect to the seat bottom 20. In other configurations, the seat back 22 is not mounted to the seat bottom 20. For instance, a vehicle seat back may be mounted to the vehicle body structure, such as in some second row seat assemblies. The seat back 22 includes a seat back frame 40, a cushion 42, a trim cover 44, and optionally a head restraint 46.

The seat back frame 40 is a structure that supports the cushion 42. The seat back frame 40 includes one or more structural members and may be made of any suitable material, such as a metal alloy, polymeric material, fiber reinforced polymeric material, or combinations thereof. In some configurations, the seat back frame 40 includes a panel, pan, suspension mat, or suspension wires upon which the cushion 42 is disposed. It is also contemplated that the seat back frame 40 may be integrally formed with the seat bottom frame 30 in some configurations.

The cushion 42 is disposed on the seat back frame 40. The cushion 42 is made of a compliant material that supports the seat occupant and distributes load forces from the seat occupant to the seat back frame 40. It is contemplated that the cushion 42 may be integrally formed with the cushion 32 of the seat bottom 20 or may be separate from the cushion 32 of the seat bottom 20. The cushion 42 and associated methods of manufacture will be discussed in more detail below.

The trim cover 44 covers at least a portion of the cushion 42. In addition, the trim cover 44 provides one or more visible exterior surfaces of the seat back 22. The seat occupant may be disposed on the trim cover 44 when seated upon the seat assembly 10. The trim cover 44 is made of any suitable material or materials, such as fabric, leather, leatherette, vinyl, or combinations thereof. The trim cover 44 may include one trim panel or a plurality of trim panels that are assembled in any suitable manner, such as by fusing or stitching. The trim cover 44 is attached to the seat back frame 40, the cushion 42, or both. For example, the trim cover 44 may include trim attachment features that are attached to the seat back frame 40, the cushion 42, or both, to inhibit removal of the trim cover 44 and help conform the trim cover 44 to the contour of the seat back frame 40, the cushion 42, or both. The trim cover 44 may also be attached to an attachment pad as will be discussed in more detail below.

The head restraint 46, if provided, is configured to support the head of a seat occupant. The head restraint 46 is disposed at the top of the seat back 22 or at an end of the seat back 22 that is disposed opposite the seat bottom 20. The head restraint 46 may be moveable in one or more directions with respect to the seat back 22 or may be integrally formed with the seat back 22.

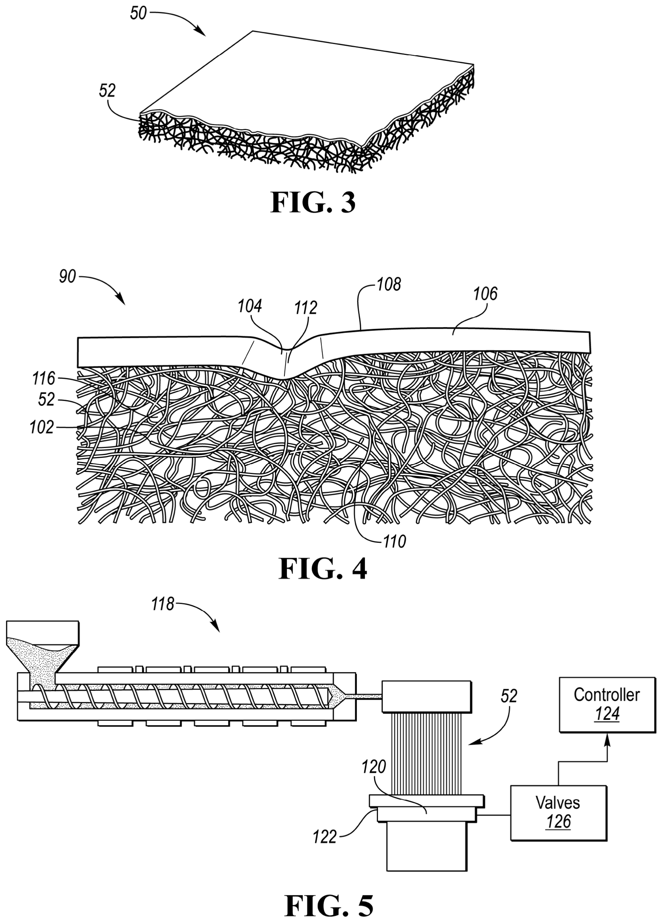

Referring to Figure 3, an example of a cushion 50 is shown. The cushion in generically designated with reference number 50 for convenience in reference. It is to be understood that the structure and description of the cushion 50 is applicable to the cushion 32 of the seat bottom 20, the cushion 42 of the seat back 22, or both.

The cushion 50 is a non-foam component or includes at least one non-foam component. The non-foam component is primarily referred to as a mesh member but may also be referred to as a stranded member, looped member, entangled member, filament mesh structure, mesh structure, stranded mesh, looped mesh, entangled mesh, or mesh cushion. In Figure 3, the cushion 50 is depicted as a non-foam component that does not include a foam component or foam material, such as urethane or polyurethane foam; however, it is contemplated that the cushion 50 may also include a foam component or foam material in addition to a non-foam component to provide additional cushioning or localized cushioning for a seat occupant. For example, foam material may be provided between the cushion 50 and a trim cover (e.g., trim cover 34, 44) that is disposed on the cushion 50, within the cushion 50, or combinations thereof. Reducing the amount of foam material that is provided with the cushion 50 or eliminating foam material from the cushion 50 reduces weight and may improve support and comfort of a seat occupant. In addition, eliminating foam material may facilitate recycling of the cushion 50.

The cushion 50 is described below in the context of a cushion 50 that does not include foam material. In this context, the cushion 50 is made of filaments 52 of polymeric material that are randomly looped, bent, curled, or entangled and are bonded together as will be discussed in more detail below. A filament 52 is directly bonded to another filament 52 rather than being indirectly bonded with a resin or other intermediate material.

The filaments 52, which may also be referred to as strands or threads, are made of any suitable material or materials. In some configurations, the filaments 52 are made of a polymeric material or thermoplastic material, such as a thermoplastic resin that is polyamide-based, polyester-based, polyimide-based, polyolefin-based (e.g., polypropylene-based, polyethylene-based, etc.), polystyrene-based, or combinations thereof. As one example, a polyethylene-based filament may be made of linear low-density polyethylene (LLPDE). The filament material may be recyclable unlike foam material or more easily recycled than foam material. It is also contemplated that a filament 52 may comprise reinforcement fibers and that the reinforcement fibers may not be made of a thermoplastic material.

In some configurations, a filament 52 may be a monofilament that is made of a single material. In some configurations, a filament 52 is made of multiple materials. As an example, a filament 52 made of multiple materials may include a core that is made of a first thermoplastic material and a sheath that encircles the core and is made of a second thermoplastic material that differs from the first thermoplastic material. It is contemplated that the cushion 50 may include a combination of monofilaments and filaments that are made of multiple materials and are not monofilaments.

Filaments 52 that are randomly looped, bent, looped, curled, or entangled are bonded together where one filament 52 contacts another filament 52, thereby resulting in a lightweight, air permeable cushion (e.g., cushion 32 and/or 42) or mesh structure having openings or voids between the filaments 52. An example of a manufacturing system 60 of making a cushion or filament mesh structure is also shown in Figure 2. In this example, the manufacturing system 60 includes a material supply 70, an extruder 72, and a funnel 74. The manufacturing system 60 also includes a cooling tank 76 and a material handling subsystem 78.

Referring to Figure 2, the material supply 70 holds material stock that is to be extruded, such as solid beads, flakes, granules, pellets, or powder made of the material. In some configurations, the material supply 70 is configured as a container or hopper. The material supply 70 provides material stock to the extruder 72.

The extruder 72 melts the material stock and extrudes the material stock into a set of filaments 52. The extruder 72 may have any suitable configuration. In some configurations, the extruder 72 includes a barrel that receives a rotatable screw and heating elements. Rotation of the screw forces the material to move through the barrel and helps heat the material due to the friction generated as the screw rotates. The material exits the barrel under pressure and in a molten state and is transported under pressure to a die 80 of the extruder 72.

The die 80, which may also be referred to as a die plate or extrusion die, has multiple through holes or filament forming openings through which the molten material passes. A single filament 52 is extruded from each through hole. The filaments 52 fall downward from the die 80 under the force of gravity into the funnel 74.

The funnel 74 consolidates or groups the filaments 52 into a more compact arrangement in which the filaments bend, curl, or loop and a filament 52 contacts and bonds to at least one other filament 52. The funnel 74 has an inlet opening or funnel inlet and an outlet opening or funnel outlet that is smaller than the funnel inlet. Individual separated filaments 52 enter the funnel inlet. The filaments 52 bend, curl, or loop and move into contact as they accumulate. The filaments 52 move through the funnel 74 toward the funnel outlet. Some filaments 52 may slide along the funnel 74 or an intervening sheet that is disposed on the funnel 74 as the filaments move toward the funnel outlet. Bonds are formed between filaments 52 at the points of contact while openings or voids between filaments 52 are present at other locations where one filament 52 does not contact or bond to another filament 52. The entangled and bonded filaments 52 pass through the funnel outlet of the funnel 74 and enter the cooling tank 76. For convenience in reference, the bonded filaments 52 are referred to as a mesh member or filament mesh structure 90.

The cooling tank 76 holds a liquid 100, such as water or a mixture of water and another fluid. The liquid 100 in the cooling tank 76 helps support the entangled and bonded filaments 52 to limit further compacting or consolidation of the filaments 52 into a less open or less porous arrangement and maintains a desired porosity and density of the filament mesh structure 90. Thus, the liquid 100 provides some buoyancy or resistance that can result in additional bending, curling, or looping of the filaments 52 adjacent to the surface of the liquid 100 or within the funnel 74 to further build the filament mesh structure 90. The liquid 100 also cools the filaments 52 when the filaments 52 are in the liquid 100. For instance, the liquid 100 cools the filaments 52 from the outside to solidify the filaments 52 and prevent the filaments 52 from bonding at additional locations. At this point, the filaments 52 are relatively stiff and no longer in a plastic state and thus generally maintain a shape and are not moldable or reformable without being reheated.

The material handling subsystem 78 transports the filament mesh structure 90 through the cooling tank 76. The material handling subsystem 78 includes various rollers and conveyors that help move the filament mesh structure 90 through the liquid 100 and out of the liquid 100. In some configurations, a tractor conveyor 92 is provided in the cooling tank 76 to help pull the filament mesh structure 90 away from the funnel 74 and to counter buoyancy of the filaments 52.

One or more other rollers, such as roller 94, keep the filament mesh structure 90 submerged in the liquid 100 and guide the filament mesh structure 90 through the cooling tank 76. For example, the roller 94 may guide the filament mesh structure 90 toward a conveyor belt 96 and shaker table 98 that are disposed outside of the cooling tank 76. The shaker table 98 shakes the filament mesh structure 90 while it is on the conveyor belt 96 to remove liquid 100. Alternatively, or in addition, the filament mesh structure 90 may be squeezed to remove liquid 100, air may be blown toward the filament mesh structure 90 to help remove liquid 100 from the filament mesh structure 90, or both. It is also contemplated that the filament mesh structure 90 may also be allowed to drip dry, or dry in ambient air.

The manufacturing system 60 described above is a continuous flow process in which the filament mesh structure 90 is formed as a continuous structure when filament extrusion is not interrupted. Further processing of the filament mesh structure 90 is provided after exiting the cooling tank 76 to cut the filament mesh structure 90 into individual pieces or blanks for individual cushions. Such processing is conducted by a cutting subsystem of the manufacturing system 60. The cutting subsystem may be of any suitable type. For instance, the cutting subsystem may employ a blade, knife, hot knife, saw, fluid jet, or the like to cut the filaments 52 of the filament mesh structure 90 into a blank. The cutting subsystem may be used to shape or contour the blank. It is also contemplated that a blank may be further shaped or contoured with other manufacturing processes, such as molding of the entire blank or a portion thereof.

With the above process, the cushion 50 may be formed of a set of filaments 52, wherein at least two members of the set of filaments 52 are looped and bonded to each other. In one or more embodiments, each member of the set of filaments 52 is looped and bonded to at least one other member of the set of filaments 52.

Figure 4 illustrates the mesh member 90 and the set of filaments 52 according to some embodiments. The mesh member 90 is provided with terminal ends 102. The terminal ends 102 may be formed by a cutting process, or any similar process of the cutting subsystem. The terminal ends 102 of the mesh member 90 terminate at a first end 108 and a second end 110 of the mesh member 90. The first end 108 and the second end 110 are positioned spaced apart and located at opposing ends of the mesh member 90. The mesh member 90 is also provided with an external surface 106. In Figure 4, the external surface 106 extends from the first end 108 to the second end 110 of the mesh member 90, and therebetween. The concentration of the set of filaments 52 is greater near the external surface 106 of the mesh member 90 than within an interior portion 116 of the mesh member 90.

The external surface 106 is provided with a trench 104 formed with a length at least partially along the external surface 106 of the mesh member 90. In some embodiments, the trench 104 extends from the first end 108 to the second end 110 of the mesh member 90. In some embodiments, the trench 104 extends between the first end 108 and the second end 110 of the mesh member 90. In other words, the trench 104 may be located along the entire length of the mesh member 90, but the trench 104 is not required to extend the entire length.

The trench 104 is provided with an intermediate region 112 located between the first end 108 and the second end 110 of the mesh member 90. The trench 104 may be formed without cutting into the external surface 106 of the mesh member 90. Because the trench 104 is not cut into the external surface 106, the trench 104 has no cut lines within the intermediate region 112 within the length of the trench 104. Additionally, the concentration of the set of filaments 52 is greater around a periphery 114 of the trench 104 than within the interior portion 116 of the mesh member 90. Further, a retainer, or other suitable fastener, may be configured to connect the trim cover 34, 44 to the trench 104 of the mesh member 90.

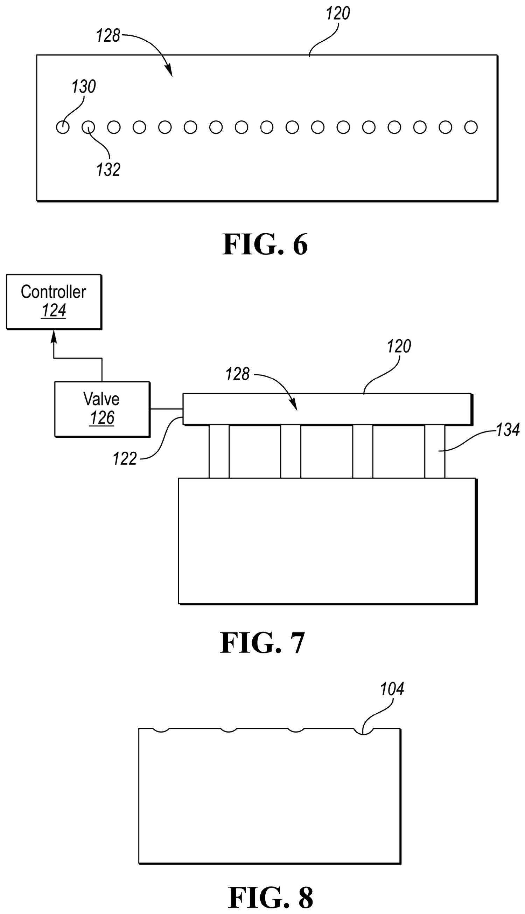

Figure 5 illustrates a manufacturing system 118 according to some embodiments. The manufacturing system 118 is provided with a funnel 120. The funnel 120 is provided with an aperture sized to match an overall cross section of a mesh member 90 and is sized to receive the set of filaments 52. The funnel 120 is provided with a nozzle assembly 128, an example of which is shown in Figure 6. The nozzle assembly 128 is provided with a plurality of fluid lines 122 and a plurality of valves 126. The plurality of valves 126 is adapted to be in communication with a controller 124 to open and close the plurality of valves 126.

With reference to Figure 7, a fluid 134 may be dispensed through the plurality of fluid lines 122 and the plurality of valves 126 to shape the set of filaments 52 as they pass through the funnel 120 and nozzle assembly 128. The fluid 134 may be water or another suitable fluid or liquid. The pressure from the fluid 134 shapes the set of filaments 52 to form the trench 104, as shown in Figure 8. Traditionally, a trench is cut into a cushion (or mesh member) after the cushion is formed through this extrusion process. This traditional method requires an additional step in the manufacturing process which can be time consuming and costly, as it requires additional equipment. The traditional cutting method also exposes terminal ends within the trench and provides a trench with a filament concentration akin to an interior of the prior art cushion. Because the trench 104 is formed by the fluid 134 as the set of filaments 52 passes through the funnel 120 and the nozzle assembly 128, this process is completed in one step which reduces manufacturing time and cost.

With reference to Figure 6, the nozzle assembly 128 may be provided with a first nozzle 130 and a second nozzle 132, spaced apart from the first nozzle 130. However, the nozzle assembly 128 may be provided with any number of nozzles. The first nozzle 130 and the second nozzle 132 may have the same shape or have different shapes from one another. For example, in Figure 6, both the first nozzle 130 and the second nozzle 132 have a circular shape.

The first nozzle 130 and the second nozzle 132 may each be provided with an individual fluid line 122 and a valve 126 so that the first nozzle 130 and the second nozzle 132 may be controlled independently. In some embodiments, the controller 124 is programmed to send a signal to the valve 126 of the first nozzle 130 and the valve 126 of the second nozzle 132 so that the fluid 134 can be dispensed through both the first nozzle 130 and the second nozzle 132 simultaneously. In some embodiments, the controller 124 is programmed to send a signal to either the valve 126 of the first nozzle 130 or the valve 126 of the second nozzle 132 so that the fluid 134 can be dispensed through either the first nozzle 130 or the second nozzle 132.

The first nozzle 130 and the second nozzle 132 may also be positioned differently from one another. For example, the first nozzle 130 could be positioned at an angle and the second nozzle 132 could be positioned at an angle different from the first nozzle 130. The ability for the fluid lines 122, the valves 126, the first nozzle 130 and the second nozzle 132 to be controlled independently allows for a user to customize and alter the shaping of the set of filaments 52 as they pass through the funnel 120 and nozzle assembly 128, without having to change the funnel 120 and nozzle assembly 128. Rather, the user can just alter which individual nozzles in the nozzle assembly 128 are turned on and off to modify the shape.

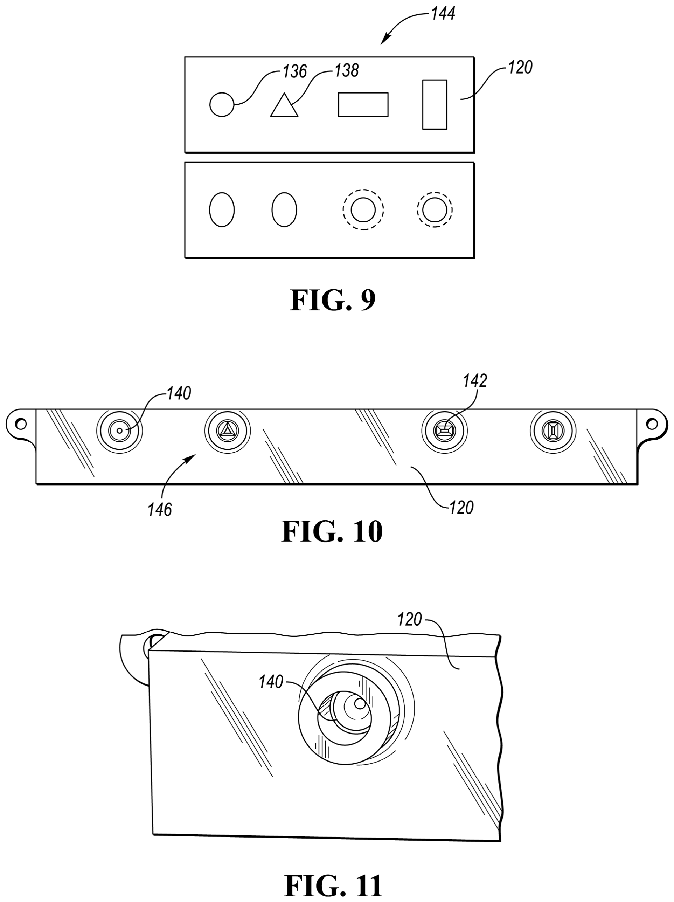

Figure 9 illustrates a nozzle assembly 144. The nozzle assembly 144 may be adapted to cooperate with the funnel 120, the plurality of fluid lines 122, the plurality of valves 126, and the controller 124. The nozzle assembly 144 may be provided with a first nozzle 136 and a second nozzle 138, spaced apart from the first nozzle 136. However, the nozzle assembly 144 may be provided with any number of nozzles. As illustrated in Figure 6, the nozzles may have the same shape, however, the nozzles may have different shapes from one another. In Figure 9, the first nozzle 136 is circular and the second nozzle 138 is triangular. The first nozzle 136 and the second nozzle 138 may also be rectangular, oval-shaped, or the like.

The first nozzle 136 and the second nozzle 138 may each be provided with the individual fluid line 122 and the valve 126 so that the first nozzle 136 and the second nozzle 138 may be controlled independently. In some embodiments, the controller 124 is programmed to send a signal to the valve 126 of the first nozzle 136 and the valve 126 of the second nozzle 138 so that the fluid 134 can be dispensed through both the first nozzle 136 and the second nozzle 138 simultaneously. In some embodiments, the controller 124 is programmed to send a signal to either the valve 126 of the first nozzle 136 or the valve 126 of the second nozzle 138 so that the fluid 134 can be dispensed through either the first nozzle 136 or the second nozzle 138.

The first nozzle 136 and the second nozzle 138 may also be positioned differently from one another. For example, the first nozzle 136 could be positioned at an angle and the second nozzle 138 could be positioned at an angle different from the first nozzle 136. The ability for the fluid lines 122, the valves 126, the first nozzle 136 and the second nozzle 138 to be controlled independently allows for a user to customize and alter the shaping of the set of filaments 52 as they pass through the funnel 120 and nozzle assembly 144, without having to change the funnel 120 and nozzle assembly 144. Rather, the user can just alter which individual nozzles in the nozzle assembly 144 are turned on and off to modify the shape.

Figures 10-11 illustrate a nozzle assembly 146. The nozzle assembly 146 may be adapted to cooperate with the funnel 120, the plurality of fluid lines 122, the plurality of valves 126, and the controller 124.

The nozzle assembly 146 may be provided with a first nozzle 140 and a second nozzle 142, spaced apart from the first nozzle 140. An enlarged view of the first nozzle 140 is shown in Figure 11. The nozzle assembly 146 may be provided with any number of nozzles. As illustrated in Figure 6, the nozzles may have the same shape, however, the nozzles may have different shapes from one another. In Figure 10, the first nozzle 140 is circular and the second nozzle 142 is rectangular. The first nozzle 140 and the second nozzle 142 may also be triangular, oval-shaped, or the like.

The first nozzle 140 and the second nozzle 142 may each be provided with the individual fluid line 122 and the valve 126 so that the first nozzle 140 and the second nozzle 142 may be controlled independently. In some embodiments, the controller 124 is programmed to send a signal to the valve 126 of the first nozzle 140 and the valve 126 of the second nozzle 142 so that the fluid 134 can be dispensed through both the first nozzle 140 and the second nozzle 142 simultaneously. In some embodiments, the controller 124 is programmed to send a signal to either the valve 126 of the first nozzle 140 or the valve 126 of the second nozzle 142 so that the fluid 134 can be dispensed through either the first nozzle 140 or the second nozzle 142.

The first nozzle 140 and the second nozzle 142 may also be positioned differently from one another. For example, the first nozzle 140 could be positioned at an angle and the second nozzle 142 could be positioned at an angle different from the first nozzle 140. The ability for the fluid lines 122, the valves 126, the first nozzle 140 and the second nozzle 142 to be controlled independently allows for a user to customize and alter the shaping of the set of filaments 52 as they pass through the funnel 120 and nozzle assembly 146, without having to change the funnel 120 and nozzle assembly 146. Rather, the user can just alter which individual nozzles in the nozzle assembly 146 are turned on and off to modify the shape.

According to a first clause, a cushion assembly is provided with a mesh member, provided with a set of filaments of polymeric material. At least two members of the set of filaments are looped and bonded to each other. Each of the set of filaments is provided with terminal ends. The mesh member is also provided with an external surface and a trench formed within a length at least partially along the external surface of the mesh member. Further, a concentration of the set of filaments is greater around a periphery of the trench than within an interior of the mesh member.

According to a second clause, the external surface extends between a first end and a second end of the mesh member.

According to a third clause, the trench extends from the first end to the second end of the mesh member.

According to a fourth clause, the trench extends between the first end and the second end of the mesh member.

According to a fifth clause, a concentration of the set of filaments is greater near the external surface of the mesh member than the interior of the mesh member.

According to a sixth clause, the cushion assembly is further provided with a trim member sized to extend at least partially across the mesh member and a retainer to connect the trim member to the trench of the mesh member.

According to a seventh clause, the cushion assembly is provided with a seat assembly. The seat assembly is provided with a seat frame. The trim cover of the cushion assembly at least partially covers the seat frame of the seat assembly.

According to an eighth clause, a method of manufacturing a cushion includes dispensing a set of filaments of molten polymeric material, through a funnel with an aperture sized to match an overall cross section of a cushion. The method also includes dispensing fluid through at least one nozzle in the funnel, the fluid shaping the set of filaments.

According to a ninth clause, the method includes dispensing fluid, through a second nozzle spaced apart from a first nozzle in the funnel, to shape the set of filaments.

According to a tenth clause, the method also includes discontinuing to dispense fluid through the first nozzle in the funnel while dispensing fluid through the second nozzle, shaping the set of filaments.

According to an eleventh clause, the method also includes adjusting the second nozzle to a position different from a position of the first nozzle, while dispensing fluid through the second nozzle, further shaping the set of filaments.

According to a twelfth clause, the method additionally includes discontinuing to dispense fluid through the second nozzle while dispensing fluid through the first nozzle, shaping the set of filaments.

According to a thirteenth clause, the method further includes adjusting the first nozzle to a position different from a position of the second nozzle, while dispensing fluid through the first nozzle, further shaping the set of filaments.

According to a fourteenth clause, the method further includes dispensing fluid, through a second nozzle spaced apart from the first nozzle in the funnel, to shape the set of filaments. The second nozzle is provided with a shape different than a shape of the first nozzle.

According to a fifteenth clause, the method even further includes shortening the set of filaments through the cross section to a cushion length.

According to a sixteenth clause, the method even further includes shortening the set of filaments through the cross section and through a trench shaped by the at least one nozzle.

According to a seventeenth clause, a cushion assembly is provided with a mesh member. The mesh member is provided with a set of filaments of polymeric material, with at least two members of the set of filaments are looped and bonded to each other. Each of the set of filaments is provided with terminal ends. The mesh member is further provided with an external surface and a trench formed with a length at least partially along the external surface of the mesh member. The trench is formed without cutting into the external surface of an intermediate region within the length of the trench.

According to an eighteenth clause, the cushion assembly is provided with a concentration of the set of filaments that is greater at a periphery of the trench than within an interior of the mesh member.

According to a nineteenth clause, the cushion assembly is further provided with the trench extending between a first end and a second end of the mesh member.

According to a twentieth clause, the cushion assembly is further provided with the trench extending from the first end to the second end of the mesh member.

According to a twenty-first clause, a system is provided with a funnel sized to receive a set of filaments of molten polymeric material. The system is also provided with a plurality of nozzles formed in the funnel to dispense fluid in the funnel to shape the set of filaments.

According to a twenty-second clause, the system is further provided with a plurality of fluid lines connected to the plurality of nozzles in the funnel; and a plurality of valves in fluid communication with the plurality of fluid lines to permit fluid to pass through the plurality of fluid lines and the plurality of nozzles.

According to a twenty-third clause, the system is further provided with a controller in communication with the plurality of valves to open and close the valves.

According to a twenty-fourth clause, the controller is programmed to send a signal to a first valve of the plurality of valves to open the first valve.

According to a twenty-fifth clause, the controller is further programmed to send a signal to a second valve of the plurality of valves to open the second valve.

According to a twenty-sixth clause, the controller is further programmed to send a signal to the first valve of the plurality of valves to close the first valve.

According to a twenty-seventh clause, the controller is further programmed to send a signal to the second valve of the plurality of valves to open the second valve after the first valve is closed.

While various embodiments are described above, it is not intended that these embodiments describe all possible forms according to the disclosure. In that regard, the words used in the specification are words of description rather than limitation, and it is understood that various changes may be made without departing from the spirit and scope of the disclosure. Additionally, the features of various implementing embodiments may be combined to form further embodiments according to the disclosure.

## Claims

1. A cushion assembly comprising:
a mesh member, comprising a set of filaments of polymeric material, wherein at least two members of the set of filaments are looped and bonded to each other, wherein each of the set of filaments comprises terminal ends, wherein the mesh member further comprises an external surface; and wherein a trench is formed with a length at least partially along the external surface of the mesh member, and wherein a concentration of the set of filaments is greater around a periphery of the trench than within an interior of the mesh member.

2. The cushion assembly of claim 1, wherein the external surface extends between a first end and a second end of the mesh member.

3. The cushion assembly of claim 2, wherein the trench extends from the first end to the second end of the mesh member,
or wherein the trench extends between the first end of the mesh member and the second end of the mesh member.

4. The cushion assembly of any of the preceding claims, wherein a concentration of the set of filaments is greater near the external surface of the mesh member than the interior of the mesh member.

5. The cushion assembly of any of the preceding claims, further comprising:
a trim member sized to extend at least partially across the mesh member; and
a retainer configured to connect the trim member to the trench of the mesh member.

6. A seat assembly comprising:
a seat frame; and
the cushion assembly of claim 5 attached to the frame, wherein the trim member at least partially covers the frame.

7. A method of manufacturing a cushion, comprising:
dispensing, through a funnel with an aperture sized to match an overall cross section of a cushion, a set of filaments of molten polymeric material; and
dispensing fluid through at least one nozzle in the funnel, the fluid shaping the set of filaments.

8. The method of claim 7, further comprising:
dispensing fluid, through a second nozzle spaced apart from a first nozzle in the funnel, the dispensing shaping the set of filaments.

9. The method of claim 8, further comprising:
discontinuing to dispense fluid through the first nozzle in the funnel while dispensing fluid through the second nozzle, shaping the set of filaments,
the method preferably further comprising:
adjusting the second nozzle to a position different from a position of the first nozzle, while dispensing fluid through the second nozzle, further shaping the set of filaments.

10. The method of claim 8, further comprising:
discontinuing to dispense fluid through the second nozzle while dispensing fluid through the first nozzle, shaping the set of filaments.

11. The method of claim any of claims 8 to 10, further comprising:
adjusting the first nozzle to a position different from a position of the second nozzle, while dispensing fluid through the first nozzle, further shaping the set of filaments.

12. The method of claim 7, further comprising:
dispensing fluid, through a second nozzle spaced apart from a first nozzle in the funnel, shaping the set of filaments, wherein the second nozzle is provided with a shape different than a shape of the first nozzle.

13. The method of any of claims 7 to 12, further comprising:
shortening the set of filaments through the cross section to a cushion length,
or shortening the set of filaments through the cross section and through a trench shaped by the at least one nozzle.

14. A cushion assembly comprising:
a mesh member, comprising a set of filaments of polymeric material, wherein at least two members of the set of filaments are looped and bonded to each other, wherein each of the set of filaments comprises terminal ends, wherein the mesh member further comprises an external surface; and wherein
a trench is formed with a length at least partially along the external surface of the mesh member, and the trench is formed without cutting into the external surface of an intermediate region within the length of the trench.

15. The cushion assembly of claim 14, wherein a concentration of the set of filaments is greater at a periphery of the trench than within an interior of the mesh member,
and/or wherein the trench extends between a first end and a second end of the mesh member,
wherein preferably the trench extends from the first end to the second end of the mesh member.
